(19) Europäisches Patentamt
European Patent Office
Office européen des brevets

(11) **EP 4 675 232 A1**

(12) **EUROPEAN PATENT APPLICATION**
published in accordance with Art. 153(4) EPC

(43) Date of publication:
**07.01.2026 Bulletin 2026/02**

(21) Application number: **24921625.0**

(22) Date of filing: **12.11.2024**

(51) International Patent Classification (IPC):
**G01D 5/347** (2006.01)   **G01D 5/38** (2006.01)

(52) Cooperative Patent Classification (CPC):
**G01D 5/34715; G01D 5/38**

(86) International application number:
**PCT/CN2024/131470**

(87) International publication number:
**WO 2025/161603 (07.08.2025 Gazette 2025/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.02.2024   CN 202410143700**

(71) Applicant: **Quanzhou Ktsense Microelectronics
Co., Ltd.
Quanzhou, Fujian 362000 (CN)**

(72) Inventor: **WANG, Chao
Quanzhou, Fujian 362000 (CN)**

(74) Representative: **RGTH
Patentanwälte PartGmbB
Neuer Wall 10
20354 Hamburg (DE)**

(54) **PHOTOELECTRIC DETECTION UNIT, PHOTOELECTRIC ENCODER SYSTEM AND ELECTRIC MOTOR**

(57)     The present application discloses a photoelectric detection unit, a photoelectric encoder system, and a motor, where the photoelectric detection unit is configured to detect a scanning light stripes representing a displacement of a grating and convert the scanning light signal into an electrical signal representing the displacement of the grating, the electrical signal generated with the scanning light stripes includes harmonic components, and the geometric shape of the photoelectric detection unit is defined to suppress the harmonic components. The present application provides a photoelectric detection unit, a photoelectric encoder system, and a motor that have high area utilization and a high signal-to-noise ratio and can reduce a measurement error and remove the harmonic components more efficiently.

FIG. 3

## Description

### TECHNICAL FIELD

The present invention relates to the field of photoelectric sensing technologies, and in particular, to a photoelectric detection unit, a photoelectric encoder system, and a motor.

### BACKGROUND

A photoelectric encoder is a sensor that converts displacements to digital signals with a grating, and it converts mechanical displacements of an output shaft into pulses or digital signals through photoelectric conversion. The mechanical displacements may be linear displacements or rotational displacements (that is, rotation angles of the output shaft). A photoelectric encoder includes a light source, a grating disc or a linear grating, a photoelectric detection device, and so on. The grating disc is a device that has multiple slits on a circular plate with a specific diameter. The linear grating is a device that has multiple slits on a long plate with a specific length. Since the grating disc (or the linear grating) and the output shaft move synchronously (the motion is rotation or translation), light emitted by a scanning unit forms a periodic scanning light pattern through the grating disc (or the linear grating). The scanning light pattern is detected by the photoelectric detection device to obtain electrical signals representing mechanical displacements of the grating disc (or the linear grating) and then obtain motion information of the output shaft, such as rotational angles, rotational speeds, and translational displacements and speeds.

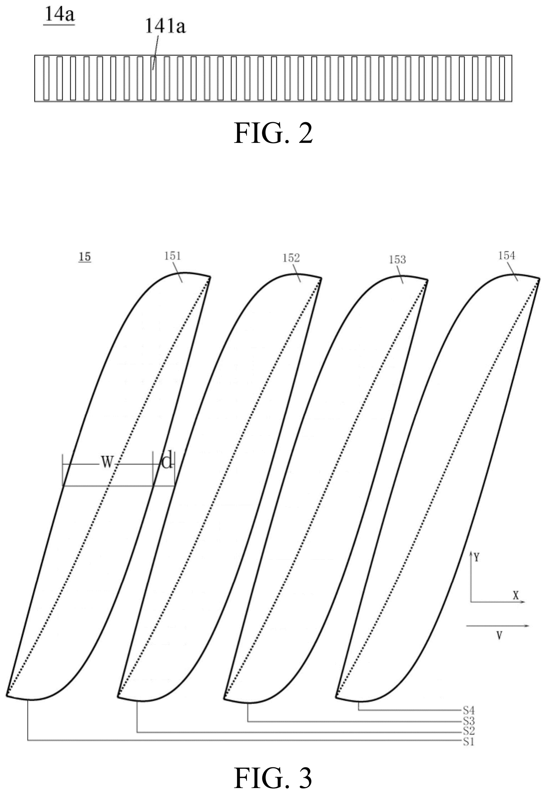

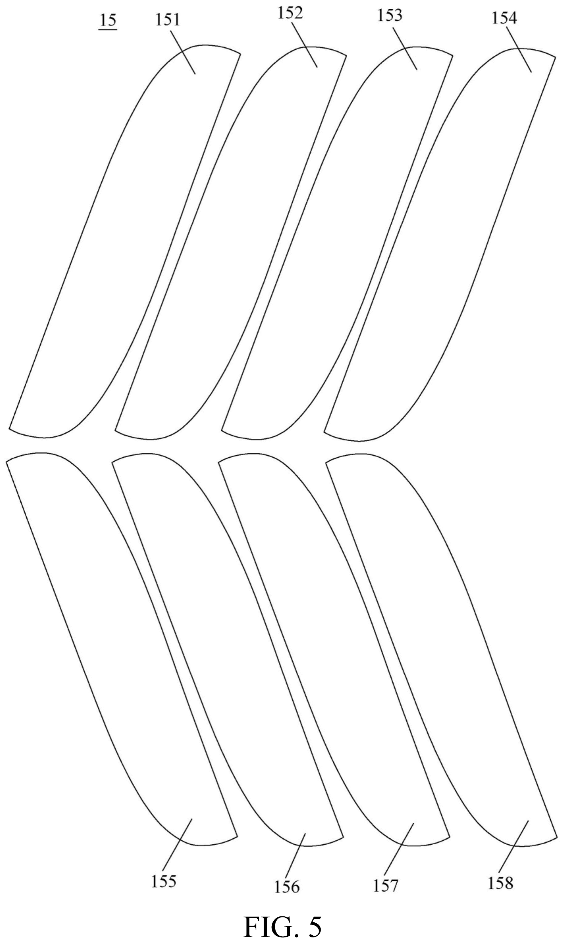

The electrical signals obtained by the photoelectric detection device by detecting the scanning light pattern includes many harmonic components, and these harmonic components introduce noise to subsequent signal processing. By designing the shape of photoelectric detection units included in the photoelectric detection device, the harmonic components can be eliminated or suppressed. In the US patent publication No. US7268883B2 titled Optoelectronic Harmonically Filtered Detector System for Scanning Unit, with reference to FIGs. 3 to 5, the specification describes how a single photoelectric detector element in embodiments of the present invention is formed according to a desired harmonic suppression effect. However, in embodiments of the invention, such as the embodiment shown in FIGs. 3 and 5, the geometric shape of the photoelectric detector element has complex curved edges, and a single photoelectric detection unit needs to be divided into multiple segments along the transverse direction, each segment being defined by a separate function. Only by combining multiple functions corresponding to the multiple segments together, the geometric shape of the photoelectric detection unit can be defined. If the shape needs to be adjusted, each function needs to be redefined, and the adjustment efficiency is relatively low. Further, the two ends of the geometric shape in the embodiment shown in FIG. 3 are acute, which makes the manufacture difficult. If adjustment is needed in this regards, each function also needs to be redefined.

However, in actual products, in order to improve the layout density and area utilization of photoelectric detection units, or in order to eliminate shapes such as acute angles that are difficult to manufacture, it is often necessary to adjust the shape of photoelectric detection units.

Therefore, it is desirable for a photoelectric detection unit that have high area utilization and high shape adjustment efficiency and in which acute angles can be easily eliminated. It is also desirable for a photoelectric encoder system and a motor including the same.

### SUMMARY

The purpose of the present application is to provide a photoelectric detection unit, a photoelectric encoder system, and a motor that have high area utilization and high shape adjustment efficiency and can easily eliminate sharp corners.

In order to achieve the above objective, in a first aspect, it is provided a photoelectric detection unit, wherein the photoelectric detection unit is used to detect scanning light stripes representing a displacement of a grating and convert the scanning light stripes into an electrical signal representing the relative displacement of the grating, and a slit period of the grating is P, wherein: a geometric shape of the photoelectric detection unit comprises a first edge and a second edge, and two vertices of the first edge and two vertices of the second edge coincide with each other to form a closed shape; the geometric shape of the photoelectric detection unit is that: after the geometric shape of the photoelectric detection unit undergoes a fan-shape-to-rectangle transformation, the first edge is described by a first description function and the second edge is described by a second description function; alternatively, the geometric shape of the photoelectric detection unit is that: the first edge is described by the first description function and the second edge is described by the second description function; the first description function comprises a first tilting function and a first harmonics filtering function, the second description function comprises a second tilting function and a second harmonics filtering function, and a difference between the first description function and the second description function is a function directly proportional to

cosω₀x, wherein $\omega_0 = 2\pi/P$, and x is a coordinate value taken along a grating-period direction.

In a second aspect, it is provided a photoelectric detection system, comprising: a light source; a grating having a plurality of slits for measurement, wherein a slit period of the grating is P; and a photoelectric detection device, wherein it is able to form a relative displacement between the photoelectric detection device and the grating, the light source casts on the photoelectric detection device scanning light stripes which represents the relative displacement, there are a plurality of photoelectric detection units formed on the photoelectric detection device, and the photoelectric detection units are configured to detect the scanning light stripes and convert the scanning light stripes into an electrical signal representing the relative displacement; a processing circuit, configured to convert the electrical signal into the relative displacement; wherein: a geometric shape of the photoelectric detection units comprises a first edge and a second edge, two vertices of the first edge and two vertices of the second edge coincide with each other to form a closed graph; the geometric shape of the photoelectric detection unit is that: after the geometric shape of the photoelectric detection unit undergoes a fan-shape-to-rectangle transformation, the first edge is described by a first description function and the second edge is described by a second description function; alternatively, the geometric shape of the photoelectric detection unit is that: the first edge is described by the first description function and the second edge is described by the second description function; and the first description function comprises a first tilting function and a first harmonics filtering function, the second description function comprises a second tilting function and a second harmonics filtering function, and a difference between the first description function and the second description function is a function directly proportional to cosω₀x, wherein $\omega_0 = 2\pi/P$, and x is a coordinate value taken along a grating-period direction.

In a third aspect, it is provided a motor, configured with the above photoelectric detection system.

Embodiments of the present invention will become clearer through the following description in conjunction with the accompanying drawings, which are used to explain embodiments of the present invention.

## DESCRIPTION OF THE ACCOMPANYING DRAWINGS

FIG. 1 is a schematic diagram of a photoelectric encoder system according to one embodiment of the present invention;

FIG. 2 is a schematic diagram of a linear grating;

FIG. 3 is a schematic diagram of multiple photoelectric detection units according to a first embodiment of the present invention;

FIG. 4 is a schematic diagram of a single photoelectric detection unit according to a first embodiment of the present invention;

FIG. 5 is a schematic diagram of two rows of photoelectric detection units according to a first embodiment of the present invention;

FIG. 6 is a schematic diagram of the principle of using a harmonics filtering function, a tilting function, and a midline adjustment function to design the geometric shape shown in FIG. 3;

FIG. 7 is a schematic diagram of a photoelectric detection unit according to a second embodiment of the present invention;

FIG. 8 is a schematic diagram of a photoelectric detection unit according to a third embodiment of the present invention;

FIG. 9 is a schematic diagram of a photoelectric detection unit according to a fourth embodiment of the present invention;

FIG. 10 is a schematic diagram of a photoelectric detection unit according to a fifth embodiment of the present invention;

FIG. 11 is a schematic diagram of a photoelectric detection unit according to a sixth embodiment of the present invention;

FIG. 12 is a schematic diagram of a photoelectric detection unit according to an seventh embodiment of the present invention;

FIG. 13 is a schematic diagram of the principle of using a harmonics filtering function, a tilting function, and a midline adjustment function to design one geometric shape of a photoelectric detection unit;

FIG. 14 is a schematic diagram of the principle of using a harmonics filtering function and a tilting function to design another geometric shape of a photoelectric detection unit;

FIG. 15 is a schematic diagram of the principle of using a harmonics filtering function and a tilting function to design still another geometric shape of a photoelectric detection unit;

FIG. 16 is a schematic diagram of the principle of using a harmonics filtering function and a tilting function to design still another geometric shape of a photoelectric detection unit; and

FIG. 17 is a structural block diagram of a motor according to one embodiment of the present invention.

**DETAILED DESCRIPTION OF EMBODIMENTS**

Below, the technical solutions in embodiments of the invention will be clearly and completely described with reference to accompanying drawings. It is apparent that the described embodiments are merely a part rather than all of the embodiments of the invention.

Generally, the components of embodiments of the present invention described and illustrated in the accompanying drawings herein may be arranged and designed in a variety of different configurations. Therefore, the following detailed description of embodiments of the present invention provided in the accompanying drawings is not intended to limit the scope of the claimed invention, but rather to illustrate selected embodiments of the invention. All other embodiments obtained by a person skilled in the art based on embodiments of the present invention without creative efforts shall fall within the protection scope of the present application.

In the following, when the terms "comprising", "having" and their cognates used in various embodiments of the present invention, they are only intended to represent specific features, numbers, steps, operations, elements, components or combinations of the foregoing and should not be understood as excluding the presence of one or more other features, numbers, steps, operations, elements, components or combinations of the foregoing or excluding the possibility of adding one or more features, numbers, steps, operations, elements, components or combinations of the foregoing.

In addition, if embodiments of the present invention involve the terms "first", "second", "third", and the like, the terms are only used to differentiate descriptions and cannot be understood as indicating or implying relative importance.

Unless otherwise defined, all terms (including technical and scientific terms) used herein have the same meaning as commonly understood by persons of ordinary skill in the art to which various embodiments of the present invention belong. The terms (for example, terms defined in commonly used dictionaries) will be interpreted as having the same meaning as the contextual meaning in the relevant technical field and will not be interpreted as having an idealized meaning or an overly formal meaning, unless expressly limited in various embodiments of the present invention.

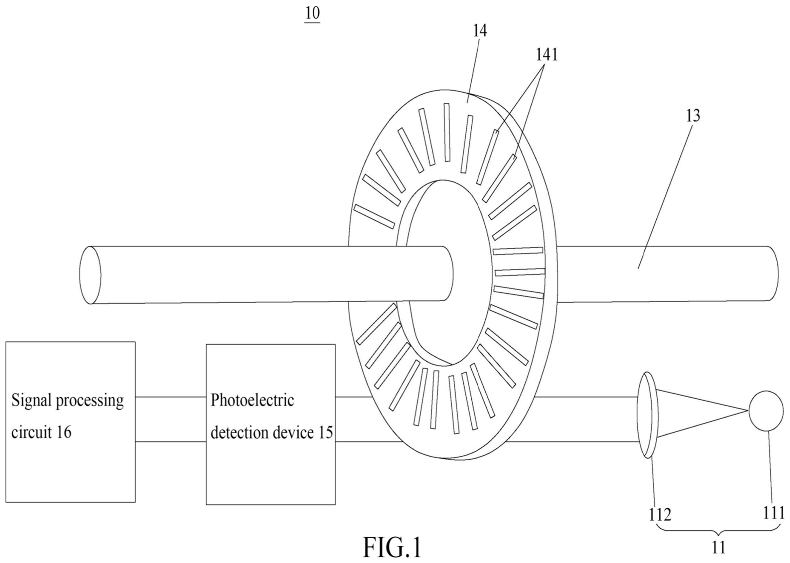

Referring to FIG. 1, a photoelectric detection system 10 provided by one embodiment of the present invention includes: a scanning unit 11 with a light source 111 and a collimating lens 112, an output shaft 13, a grating disc 14 that has slits 141 and that rotates synchronously with the output shaft 13, a photoelectric detection device 15, and a signal processing circuit 16. The slits 141 are periodically arranged light-transmitting stripes. More specifically, the periodically arranged stripes on the grating disc 14 form periodically arranged transparent regions and opaque regions (the "transparent regions" are the "slits" mentioned above). The grating disc 14 can rotate synchronously with the output shaft 13. The light emitted by the light source 111 passes through the collimating lens 112 to form parallel light. During the rotation of the grating disc 14, the parallel light passes through the grating disc 14 and forms light stripes which are periodically changing (referred to as "scanning light stripes" above) on the photoelectric detection device 15. The photoelectric detection device 15 detects the scanning light stripes to form electrical pulse signals. By processing the electrical pulse signals, current information of the output shaft such as a rotation angle, the number of revolutions that have been made, and a rotation speed can be obtained.

It should be noted that the scanning unit 11 is not limited to the light source 111 and the collimating lens 112, and other collimated light sources or scanning gratings can also be used in the scanning unit 11, as long as parallel light can be formed. The specific form of the scanning unit 11 is not limited herein. It is unnecessary that the grating disc 14 rotates synchronously with the output shaft 13; it can be the photoelectric detection device 15 that rotates synchronously with the output shaft 13. As long as a relative displacement is formed between the grating disc 14 and the photoelectric detection device 15, the relative displacement can be used to measure various information of the output shaft related to the rotation angles.

The photoelectric detection system 10 can also be in other forms or include other components. For example, if being configured to detect a translational displacement or a translational speed, the photoelectric detection system includes a light source, a linear grating, a photoelectric detection unit, and other corresponding components. Embodiments of the present application are not limited to the specific form of the photoelectric detection system 10. In the present patent application document, the term "grating" shall be understood to encompass at least a disc-shaped grating (i.e., a grating disc) and a linear grating when "grating" is referenced to in isolation.

There are M slits 141 on the grating disc 14, and the distance between the photoelectric detection device 15 and the center of the rotating shaft is R (in this case, the photoelectric detection 15 is regarded as a point; according to common approaches in this field, R may also be taken as the distance between the midpoint of the photosensitive part of the photoelectric detection device 15 and the center of the rotation axis). In this case, the period P of the slits

(the slit period) is $2\pi R/M$. In a preferred implementation, the shape of the slits is fan-shaped or fan-like-shaped. The two side edges of a slit eventually intersect at the center of the grating disc, while the upper and the lower edges may be standard arcs. This shape can be transformed by a fan-shape-to-rectangle transformation from the shape in the polar coordinate system into a standard rectangle in the Cartesian coordinate system. The harmonic suppression methods commonly used in the industry is based on grating slits with a standard rectangular shape. However, in actual usage, the length of the grating slits is generally larger than the size of the photoelectric detection device 15. That is, the shapes of the two edges at the top and bottom of a grating slit do not affect the distribution of light cast onto the photoelectric detection device 15. Therefore, the shapes of the two edges at the top and the bottom of the grating slit may be straight lines or other curves. In addition, since the slits on the grating are very dense, the length of a single grating slit is much larger than its width. Therefore, a single grating slit may be regarded as a rectangle. Even if rectangular slits are used in the grating instead of fan-shaped slits, the measurement can still be implemented, but the harmonic suppression effect is slightly worse, resulting in a slightly weaker magnitude of the fundamental frequency component in the final obtained electrical signal. Therefore, the slits 141 in the grating disc 14 only need to be approximately fan-shaped. After the light emitted by the light source 111 passes through the grating disc 14, scanning light stripes with a spatial period P is generated and is cast onto the photoelectric detection device 15. Considering a single period, the geometric shape of one light stripe is fan-shaped or approximately sector-shaped. The light sensed by each point of the photoelectric detection device 15 is square-wave light wave.

A linear grating is used when the photoelectric detection system 10 is configured to detect a translational displacement or a translational speed. Referring to FIG. 2, a linear grating 14a is shown. This type of grating is usually used to measure a translational displacement. This linear grating has slits 141a, and the period P of the slits 141a can be calculated through L/M, where L is the total length of the grating, and M is the total number of the slits. After passing through the linear grating 14a, the light from the light source also forms light stripes, which is cast onto the corresponding photoelectric detection unit. The light sensed by each point of the photoelectric detection device 15 is square-wave light wave.

Referring to FIG. 3, the photoelectric detection device 15 includes multiple photoelectric detection units. FIG. 3 shows four photoelectric detection units 151, 152, 153, and 154, which respectively output sensor signals S1 to S4. It should be noted that, when used with a grating disc, the shape of the photoelectric detection units 151, 152, 153, and 154 shown in FIG. 3 is slightly different from the shape of the actually manufactured photoelectric detection units. The shape of the actually manufactured photoelectric detection units is obtained by performing a rectangle-to-fan-shape transformation on the shape of the photoelectric detection units 151, 152, 153, and 154 shown in FIG. 3. In practice, generally speaking, the shape shown in FIG. 3 is designed through mathematical expressions, and then the shape of the actually manufactured photoelectric detection units is obtained by performing a rectangle-to-fan-shape transformation on the designed shape. What is designed through mathematical expressions is a slender "pea pod" shape that is centrally symmetrical with respect to the center of the shape, as shown in FIG. 3. The shape of the actually manufactured photoelectric detection units obtained after a rectangle-to-fan-shape transformation is similar to the "pea pod" shape but slightly deformed based on the "pea pod" shape shown in FIG. 3. These are common methods used by persons skilled in the art and will not be described in detail. For photoelectric detection units used with a linear grating 14a, after the shape shown in FIG. 3 ("pea pod" that is centrally symmetrical with respect to the center of the shape) is designed directly through mathematical expressions, it may be manufactured onto the photoelectric detection device without necessity of rectangle-to-fan-shape transformation.

Normally, the sensor signals S1 to S4 have a fixed phase difference with each other. Preferably, there is a 90-degree phase difference between adjacent ones of S1 to S4 signals. By inputting S1 to S4 to a signal processing circuit 16 for processing, physical quantities such as a rotation azimuth angle, a rotation period, and a rotation speed of the rotating shaft can be obtained.

If the photoelectric detection device 15 is not used with the grating disc 14 and instead it is used with the linear grating 14a, by inputting S1 to S4 to the corresponding signal processing circuit for processing, physical quantities such as a translational displacement and a speed can be obtained, and whether it has moved to a specific position can be determined.

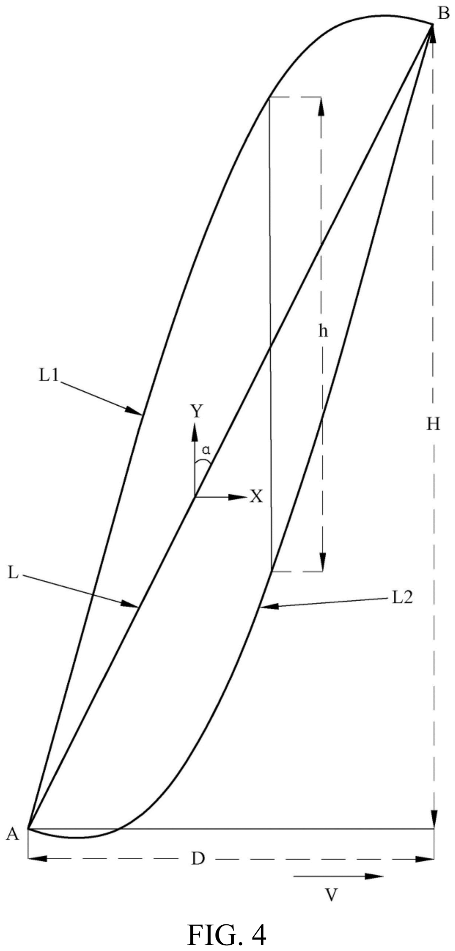

In order to simplify the illustration, the following embodiments are all described based on photoelectric detection units each of which has the shape of the "pea pod" that is centrally symmetrical with respect to the center of the shape as shown in FIG. 4. Persons skilled in the art can understand that when the photoelectric detection device 15 is used with a grating disc, photoelectric detection units designed according to embodiments of the present application needs to undergo rectangle-to-fan-shape transformation before being manufactured onto the photoelectric detection device 15. If the photoelectric detection device 15 is used with the linear grating 14a, the photoelectric detection units do not need to undergo rectangle-to-fan-shape transformation and can be directly manufactured onto the photoelectric detection device 15. The rectangle-to-fan-shape transformation and its inverse transformation, that is, fan-shape-to-rectangle transformation, are common technologies in the field of shape transformation. The rectangle-to-fan-shape transformation is used to transform shapes in the rectangular coordinate system into shapes in the polar coordinate system; the fan-shape-to-rectangle transformation is used to transform shapes in the polar coordinate system into shapes in the rectangular coordinate system. The two transformations will not be described herein in detail. US patent US7268883B2 also mentions a specific algorithm for reference.

Referring to FIG. 3, W is the width of the widest part of the photoelectric detection unit 151 and d is a minimum gap width between adjacent photoelectric detection units (for example, 151 and 152), the following equation needs to be satisfied:

$$P = N(W + d) \quad (3).$$

where P is the slit period of the grating, and N is the number of photoelectric detection units that need to be placed in a single row within a single slit period of the grating and is an integer greater than or equal to 1. Since the grating slit periods extend in the X direction, the X direction is referred to as the "grating-period direction".

Since the scanning light wave sensed by each point on the photoelectric detection device 15 is a square wave, it can be expanded into the sum of a fundamental frequency light wave (a fundamental frequency component) and odd harmonic components:

$$\mathrm{rect}(t) = A_0 + \frac{A_1}{\pi} \cos(\omega_0 t) + \frac{A_3}{\pi} \cos(3\omega_0 t) + \frac{A_5}{\pi} \cos(5\omega_0 t).$$

where $A_0$ is an average value of the square wave after time integration, and $A_i$ is an amplitude of each harmonic. The angular velocity of the fundamental frequency light wave is as follows:

$$\omega_0 = 2\pi/P.$$

According to the orthogonal relationship of trigonometric functions, with reference to FIG. 4, if the height value h of a single photoelectric detection unit 151 in the Y direction varies in a manner of $COS(\omega_0 x)$ along the x-axis, under the irradiation of the square wave, other harmonic components in the electrical signal output by the single photoelectric detection unit 151 are all 0 except that the fundamental frequency component is not zero. So the suppression or filtering of multiple-order harmonic components is achieved. This is a common method for harmonic suppression in this field and is not described in detail.

In the existing technology, the implementation of varying the height value of a single photoelectric detection unit 151 in the Y direction in the a manner of $COS(\omega_0 x)$ along the x-axis is very complex and needs to be performed in segments. That is, the range of x coordinates related to a single optical detection unit 151 is divided in to several segments, and a function representing how the shape edges vary is set separately for each segment. If there are shapes such as acute angles that are difficult to manufacture at the vertices of the geometric shape, or if the shape of optical detection units needs to be adjusted due to there are too many free areas in the sensor causing that area utilization is low or due to other reasons, the shape edge function will need to be re-selected, causing the adjustment efficiency to be relatively low.

Herein, according to embodiments of the present invention, a simple and easy-to-implement method for setting shape edges is provided, which makes it easy to adjust shapes of optical detection units and obtain satisfactory shapes according to specific needs.

Referring to FIG. 4, according to an embodiment of the present invention, the outer edge of the geometric shape of the photoelectric detection unit 151 includes a first edge L1 and a second edge L2. The first edge L1 and the second edge L2 are respectively described by the first description function and the second description function. That is, the geometric shape of the photoelectric detection unit 151 according to embodiments of the present invention includes two edges, each of which is described by a description function, and the two edges form a closed geometric shape.

When the first edge L1 and the second edge L2 are described by description functions, the variables of the description functions on the X-axis and Y-axis are x and y, respectively. When x takes its minimum value, it corresponds to the vertex A of the geometric shape. When x takes its maximum value, it corresponds to the vertex B of the geometric shape. As x changes from the minimum value to the maximum value, the value of y also changes continuously, and a curve between the two vertices is formed (when x and y are discrete values, the phrase "changes continuously" is actually "changes quasi-continuously" between closely spaced discrete values). Therefore, the first description function and the second description function respectively form the first edge L1 and the second edge L2 between the vertices.

Further, in one embodiment of the present invention, the first description function and the second description function both include: a tilting function, a midline adjustment function, and a harmonics filtering function. The harmonics filtering function is used to ensure that for any given value of x, the difference between the first description function and the second description function changes in a manner of $COS(\omega_0 x)$. The tilting function is used to make the photoelectric detection unit have a certain posture. The midline adjustment function is used to adjust the midline of the shape of the photoelectric detection unit as needed, thereby fine-tuning the outline of the photoelectric detection unit. A preferred embodiment of the above function is as follows, where $y_{arc1}$ is the first description function, and $y_{arc2}$ is the second description function:

$$y_{arc1} = kx + A_1 COS(\omega_0 x) + A_2 SIN(2\omega_0 x) \qquad (1);$$

and

$$y_{arc2} = kx - A_1 COS(\omega_0 x) + A_2 SIN(2\omega_0 x) \qquad (2)$$

$\omega_0 = 2\pi$ /P, and P is a grating slit period. $\omega_0$ is an angular velocity of the fundamental frequency component included in the square-wave light wave. In the example shown in FIG.4, $A_1$=80, $A_2$=5, P=240, and k=2.

Persons skilled in the art will understand that $A_1$ and $A_2$ are actually constants related to the size of the photoelectric detection unit and they vary depending on the size of the photoelectric detection unit. Persons skilled in the art can select appropriate parameters according to the desired size of the photoelectric detection unit and other actual conditions. Generally speaking, if the size of the photoelectric detection unit is on the micrometer level, $A_1$ and $A_2$ are also on the micron level; if the size of the photoelectric detection unit is on the nanometer level, $A_1$ and $A_2$ are also on the nanometer level. In the present application document, the grating period P is set as an example to a unit-free constant such as 240 or 256. This means that the size of the photoelectric detection unit is also a unit-free constant. In this case, $A_1$ and $A_2$ are also unit-free constants. These values are only an example to explain the technical solution of this embodiment. In actual practice, the values of $A_1$ and $A_2$ may be adjusted according to the actual size of P.

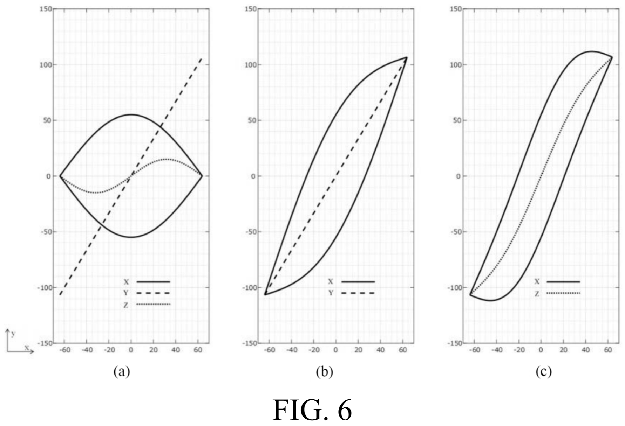

In equations (1) and (2), kx is the tilting function. When k=0, the shape shown in FIG. 3 degenerates into the shape shown by the two X lines in part (a) in FIG. 6; that is, the tilting of the entire shape is 0. The shape shown in FIG. 3 corresponds to k≠0. In this case, the shape exhibits a noticeable degree of tilt, which helps to place photoelectric detection devices more densely in a limited area. In this case, the photoelectric detection unit 151 actually tilts at an angle $\alpha$ relative to the Y direction, where 0≤$\alpha$<90°, and

$$k = \tan(90 - \alpha) = \frac{H}{D} \qquad (10).$$

H is the height of the photoelectric detection unit 151 in the Y direction. D is the width occupied by the photoelectric detection unit 151 in the X direction, that is, the difference between the maximum value and the minimum value of the x value range. Preferably, D=P/2, so that light cast through one grating slit 141 just covers a single photoelectric detection unit. In this case, the harmonics filtering effect is the best. For the photoelectric detection device 15 with only a single row of photoelectric detection units 151 to 154, the height H of the photoelectric detection unit 154 is typically less than 1/2 of the height of the grating to ensure that the photoelectric detection units 151 to 154 are located in a place where the light is most concentrated. According to the required values of H and D, an appropriate k value may be calculated. Based on experience, a preferred value range of k is 1 to 10.

It should be noted that, although a monotonically changing function (such as kx) within the x range is used as the tilting function in order to easily obtain densely placed photoelectric detection units, the tilting function is not limited to this form. Designers can choose an appropriate tilting function as needed. The tilting function may be a non-monotonically changing function within the x range as needed, to obtain photoelectric detection units each with a special curved shape. Furthermore, even if a monotonically changing function within the x change range is used, the tilting function is not limited to a linear function kx. Instead, the tilting function may be other forms of monotonically changing functions to obtain photoelectric detection units with a roughly elongated shape but more morphological changes along the edges that the designer wants.

Further, in the calculation formulas (1) and (2), $A_2 SIN(2\omega_0 x)$ is the midline adjustment function to adjust the shapes of the edges L1 and L2 in the geometric shape of the photoelectric detection units. The specific role of the midline adjustment function will be explained with reference to FIG. 6. In addition, other functions may also be used as a midline adjustment function. In order to maintain that the curves L1 and L2 are closed at vertices A and B, this function should satisfy that y is 0 when x is the maximum and minimum values, for example, $A_2 SIN(3\omega_0 x)$, $A_2 SIN(4\omega_0 x)$ or other functions. Designers may adjust the shape of the photoelectric detection units by adjusting the form of the midline adjustment function or its preceding coefficients.

Further, in the calculation formulas (1) and (2), $\pm A_1 COS(\omega_0 x)$ is the harmonics filtering function. Their role is to obtain a function directly proportional to $COS(\omega_0 x)$ when the formula (2) is subtracted from the formula (1), making the height of the photoelectric detection unit changes in the manner of $COS(\omega_0 x)$ in the entire x value range of the photoelectric detection unit. When the square-wave light wave is cast on the photoelectric detection units 151 whose height changes in such a manner, in the electrical signal output by a single photoelectric detection unit 151, only the fundamental frequency component is not zero while other harmonic components are all zero. Thus, the suppression or filtering of multiple-order harmonic waves is achieved. The harmonics filtering function may also have other forms, as long as when formula (2) are subtracted from formula (1), a function directly proportional to $COS(\omega_0 x)$ is obtained. Different forms of harmonics filtering functions are also able to adjust the edges of the photoelectric detection unit.

Still referring to FIG. 4, the photoelectric detection unit 151 extends along the Y direction, and the scanning light stripes enters the photoelectric detection unit from the X direction.

Therefore, the desired height of a single photoelectric detection unit 151 in the Y direction may be obtained based on the difference between the first description function and the second description function, i.e., the above formulas (1) and (2):

$$y_{arc1} - y_{arc2} = 2A_1 COS\left(\frac{2\pi}{P} \cdot x\right) \qquad (11)$$

Specifically, in the embodiment shown in FIG.4, signals output by the photoelectric detection units 151, 152, 153, and 154 after the harmonic components are suppressed are respectively as below:

$$F_1(x) = l \cdot A_1 COS(\frac{2\pi}{P}x + 0) \qquad (12)$$

$$F_2(x) = l \cdot A_1 COS(\frac{2\pi}{P}x + 0.5\pi) \qquad (13)$$

$$F_3(x) = l \cdot A_1 COS(\frac{2\pi}{P}x + \pi) \qquad (14)$$

$$F_4(x) = l \cdot A_1 COS(\frac{2\pi}{P}x + 1.5\pi) \qquad (15)$$

$l$ is a constant. It should be noted that coefficients $A_1$ and $A_2$ are used to adjust amplitudes of the cosine function and the sine function of the above formulas (1) and (2) respectively. Specifically, for the photoelectric detection unit 151, $y_{arc1}$ and $y_{arc2}$ both include a linear function $kx$, thus ensuring that the geometric shape of the photoelectric detection unit 151 extends in the Y direction, and the coefficient k is used to adjust the tilting degree of the photoelectric detection unit. The coefficient $A_1$ may be used to adjust the width W of a single photoelectric detection unit 151, and the coefficient $A_2$ may be used to adjust the vertex angles at the vertices A and B of the photoelectric detection unit 151 and adjust the flatness near the vertex corner.

Referring to FIG. 5, FIG. 5 shows that the photoelectric detection device 15 includes two rows of photoelectric detection units. The first row of photoelectric detection units includes four photoelectric detection units 151, 152, 153, and 154. The second row of photoelectric detection units includes another four photoelectric detection units 155, 156, 157, and 158.

Referring to FIG. 6, FIG. 6 is a schematic diagram of the principle of using a harmonics filtering function, a tilting function, and a midline adjustment function to design a shape shown in FIG. 3.

As shown in part (a) of FIG. 6, the X line includes two lines, i.e., an upper line and a lower line, which respectively corresponds to the harmonics filtering functions $A_1 COS(\omega_0 x)$ and $-A_1 COS(\omega_0 x)$. The Y line is a line corresponding to the tilting function kx. The Z line is a curve corresponding to the midline adjustment function $A_2 SIN(2\omega_0 x)$. A1=55, A2=15, k=5/3, P=256, and $\omega_0 = 2\pi/P$. In the shape enclosed by two X lines in part (a) of FIG. 6, as the value of x changes, the distance between the upper and the lower X lines changes according to a cosine function, which constitutes the basis for the suppression or removal of harmonics. However, in practice, a shape generally needs to have a posture to improve the area utilization of the sensor or simplify subsequent calculation algorithms. Therefore, the shape enclosed by two X lines in part (a) of FIG. 6 will not be directly used.

Since the only difference between the cosine function and the sine function is that the phase difference is 90 degrees, the harmonics filtering function may also be a sine function. With the advancement of technology, maybe other functions according to which the distance between the upper and the lower X lines changes can also achieve harmonics filtering to some extent or in some aspects. In these cases, such functions may directly replace the cosine or sine function in the above-mentioned embodiment and be used as a harmonics filtering function, and the shape adjustment method disclosed in the embodiment of the present application may still be used to design the shape of photoelectric detection units.

In part (b) of FIG. 6, the upper and the lower X lines correspond to $kx+A_1COS(\omega_0 x)$ and $kx-A_1COS(\omega_0 x)$, respectively. That is, adding kx respectively to the curves $A_1COS(\omega_0 x)$ and $-A_1COS(\omega_0 x)$ is equivalent to adding a tilt to the shape formed by the two X lines in part (a) in FIG. 6. Therefore, the function that can produce this effect is called the "tilting function". The midline Y of the shape in part (b) of FIG. 6 is kx. The meaning of the "midline" is that for every value of x, the distance in the y direction between the midline Y and the upper X line is $A_1COS(\omega_0 x)$, and so is the distance between the midline Y and the lower X line (the upper and the lower X lines respectively corresponds to the upper and the lower outer edges of the shape).

In part (c) of FIG. 6, the Z line is a curve obtained by adding $A_2SIN(2\omega_0 x)$ to the Y line in part (b) of FIG. 6. The Z line is also the midline of the shape. That is, for every value of x, the distance in the y direction between the Z line and the upper X line is $A_1COS(\omega_0 x)$, and so is the distance between the Z line and the lower X line. It can be seen that the effect of adding $A_2SIN(2\omega_0 x)$ is to fine-tune the midline Y in the shape in part (b) of FIG. 6, thereby achieving fine-tuning of the outer edge of the shape. Therefore, the function that can produce this effect is called the "midline adjustment function". In this case, the upper and the lower curves X in part (c) of FIG. 6 correspond to $kx+A_1COS(\omega_0 x) + A_2SIN(2\omega_0 x)$ and $kx-A_1COS(\omega_0 x) + A_2SIN(2\omega_0 x)$, respectively.

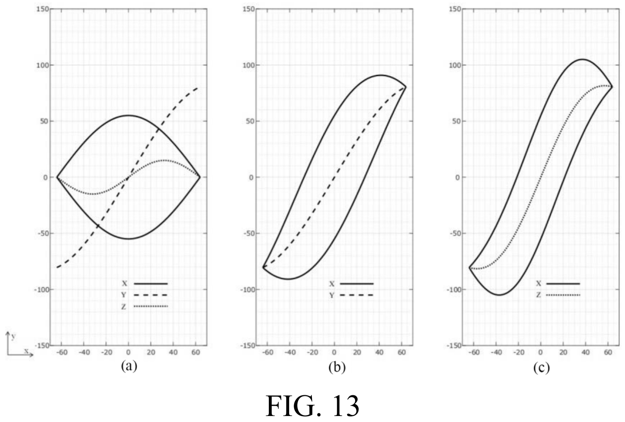

The example shown in parts (a) to (c) of FIG. 6 illustrates the principle of adjusting the shape of photoelectric detection units according to one embodiment of the present invention. The principle is as below: the shape is made to "stand up" or obtain other postures by using a tilting function; then, the midline of the shape is fine-tuned by using an appropriate midline adjustment function, thereby adjusting the curvature of each part of the edges in the shape. With this method, designers can select an appropriate tilting function to obtain a general posture based on the general form of a desired shape, and then fine-tune the outer edge curves of the shape by selecting an appropriate midline adjustment function until the desired shape is obtained. Generally, if the shape needs to "stand up", the tilting function is a monotonically changing function within the x value range. The degree of "standing up" of the shape depends on the rate of change of this function. When the x value range is symmetrical with respect to the origin of the x axis, an odd function may be used as the tilting function. The midline adjustment function is used as needed. When suitable shapes is obtained by combining the harmonics filtering function with the tilting function, the midline adjustment function may be unnecessary. Some other examples of the tilting function and the midline adjustment function will be given later with reference to FIGs. 13 to 15.

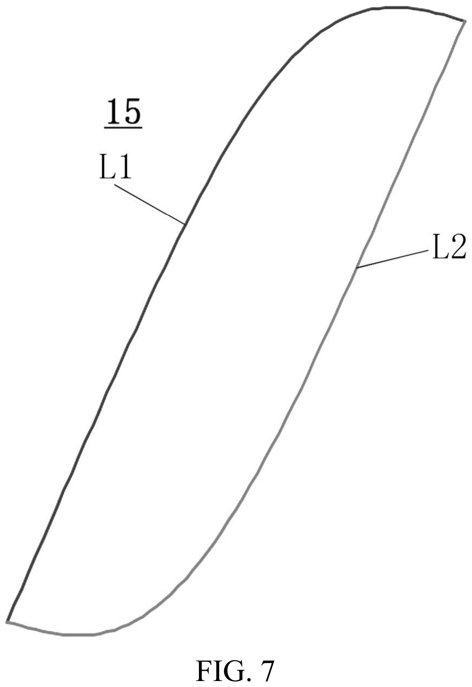

In the preferred embodiment shown with formulas (1) and (2), parameters $A_1$ and $A_2$ may also be adjusted to fine-tune the shape. Referring to FIGs. 7 to 12, the impact of coefficients $A_1$ and $A_2$ in the formulas (1) and (2) on the shape of the photoelectric detection units is described.

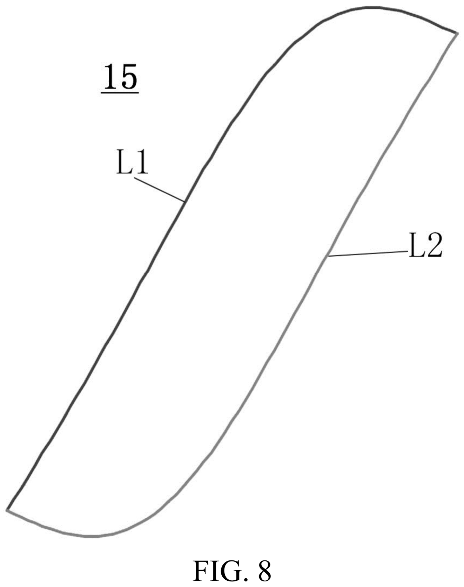

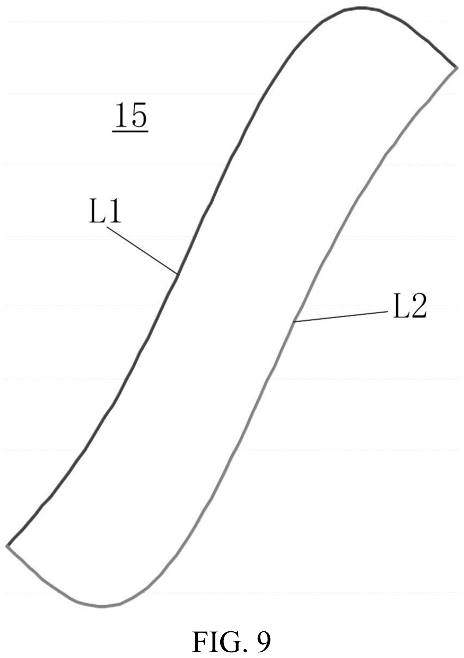

In FIG. 7, values of parameters are: k=1, $A_2$ = 5, $A_1$ = 42, and P=268. In FIG. 8, values of parameters are: k=1, $A_2$ = 10, $A_1$ = 42, and P=268. In FIG. 9, values of parameters are: k=1, $A_2$ = 20, $A_1$ = 42, and P=268.

It is not difficult to conclude from FIGs. 7 to 9 that when other coefficients remain unchanged, by adjusting the coefficient $A_2$, the flatness near the vertex corner can be easily adjusted. When $A_1$ = 42 and remains unchanged, with $A_2$ gradually increasing from 5 to 10 and to 20, the flatness gradually becomes worse. Therefore, through the first description function $y_{arc1}$ and the second description function $y_{arc2}$, a geometric shape of photoelectric detection units 151 with a desired flatness can be quickly obtained. It should be noted that when the flatness is better, the manufacture of the photoelectric detection units 151 becomes easier. When multiple such photoelectric detection units 15 are arranged together, space utilization is also higher.

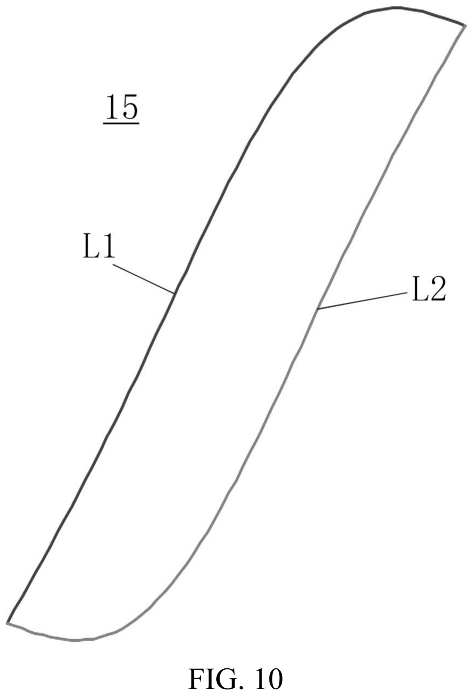

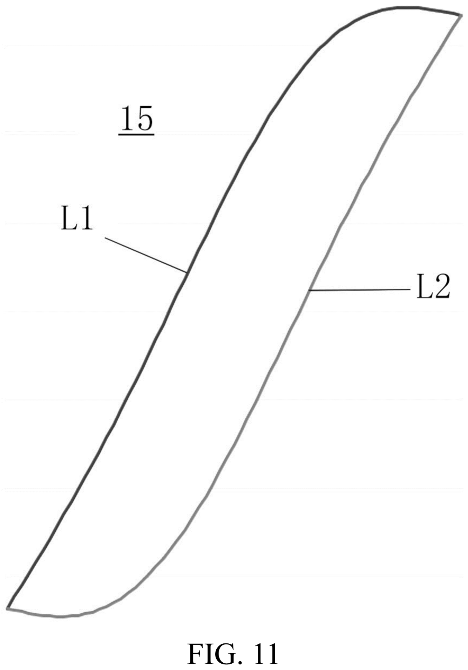

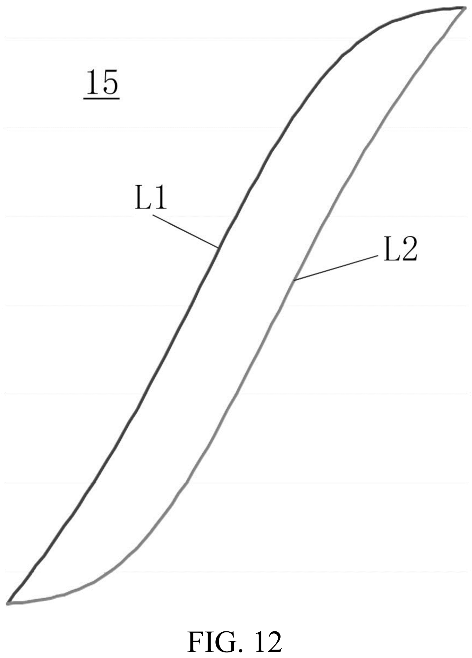

In FIG. 10, values of parameters are: k=1, $A_2$ = 10, $A_1$ = 35, and P=268. In FIG. 11, values of parameters are: k=1, $A_2$ = 10, $A_1$ = 30, and P=268. In FIG. 12, values of parameters are: k=1, $A_2$ = 10, $A_1$ = 20, and P=268.

It is not difficult to conclude from FIGs. 10 to 12 that when other coefficients remain unchanged, by adjusting the coefficient $A_1$, the width W of a single photoelectric detection unit 151 can be very easily adjusted, and the geometric shape with a desired width W can be obtained.

When other coefficients remain unchanged, by adjusting the coefficient $A_1$, the width W can be very easily adjusted. When $A_2$ = 10 and remains unchanged, as the value of $A_1$ gradually becomes smaller from 35 to 30 and to 20, the width W gradually becomes narrower. As the width W becomes narrower, the vertex angles of the photoelectric detection unit quickly becomes an acute angle. Acute angles are difficult to fabricate during manufacture. Therefore, it is necessary to select an appropriate $A_1$ so that the angle at the vertex is not an acute angle and a desired width W of photoelectric detection units 151 is obtained.

FIGs. 13 to 16 are examples of using other forms of tilting functions and midline adjustment functions.

In part (a) of FIG. 13, the two X lines are curves respectively corresponding to harmonics filtering functions $A_1COS(\omega_0 x)$ and $-A_1COS(\omega_0 x)$; the Y line is a curve corresponding to the tilting function $(5/3)x - 0.0001x^3$; and the Z line is a curve corresponding to the midline adjustment function $A_2SIN(2\omega_0 x)$. In this case, A1=55, A2=15, P=256, $\omega_0 = 2\pi/P$. In part (b) of FIG. 13, the upper and the lower X lines are curves obtained by combining the tilting function $(5/3)x - 0.0001x^3$ with $A_1COS(\omega_0 x)$ and $- A_1COS(\omega_0 x)$, respectively. The Y line in part (b) of FIG. 13 is consistent with the Y line in part (a) of FIG. 13. It is a curve corresponding to the tilting function $(5/3)x - 0.0001x^3$, and it is actually the midline of the shape shown in part (b) of FIG. 13. It can be seen that the combination of the harmonics filtering function and the tilting function has produced a good shape. The tilting degree and thickness of the shape are suitable for horizontal arrangement of multiple photoelectric detection units, and there are no obvious acute angles. This shape is ready for use. In part (c) of FIG. 13, the midline adjustment function $A_2SIN(2\omega_0 x)$ is added, and the Z line is the midline. By comparing the Z line with the Y midline in part (b) of FIG. 13, it can be seen that the form of the midline has been adjusted, which has led to further changes in the forms of the upper and the lower curves. The shape shown in part (c) of FIG. 13 is also a suitable shape for use.

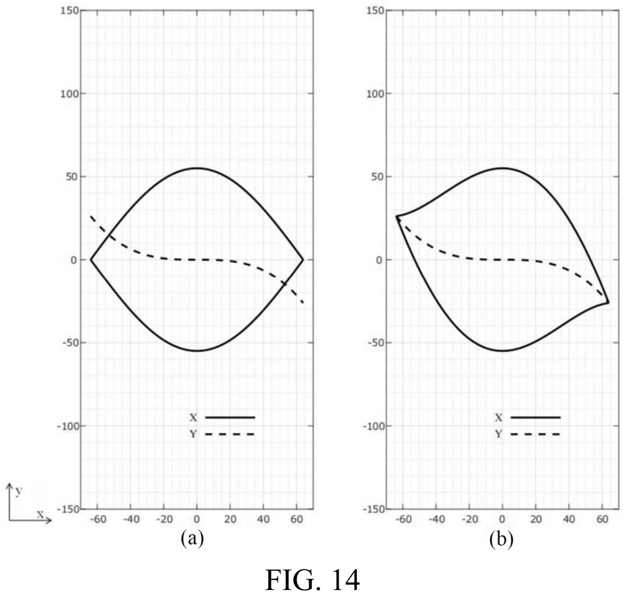

In part (a) of FIG. 14, the two X lines are curves respectively corresponding to harmonics filtering functions $A_1COS(\omega_0 x)$ and $-A_1COS(\omega_0 x)$; the Y line is a curve corresponding to the tilting function $-0.0001x^3$. In this case, A1=55, P=256, and $\omega_0 = 2\pi/P$. In part (b) of FIG. 14, the upper and the lower X lines are curves obtained by combining the tilting function $-0.0001x^3$ with $A_1COS(\omega_0 x)$ and $-A_1COS(\omega_0 x)$, respectively. The Y line in part (b) of FIG. 14 is consistent with the Y line in part (a) of FIG. 14. It is a curve corresponding to the tilting function $-0.0001x^3$, and is actually the midline of the shape shown in part (b) of FIG. 14. The shape shown in part (b) of FIG. 14 is approximately a rectangle, and it is easy to arrange under certain circumstances (With this shape, a single row is only capable to include two photoelectric detection units in one period of the grating. In order to simplify the subsequent algorithm, it is generally expected that the photoelectric detection device includes four photoelectric detection units in one period of the grating. The shape shown in part (b) of FIG. 14 may be arranged in two rows to meet this requirement, or the subsequent algorithm is not expected to be simple and only two photoelectric detection units are placed in each period of the grating). Besides, there are no acute angles that are difficult to manufacture, and this shape is also usable.

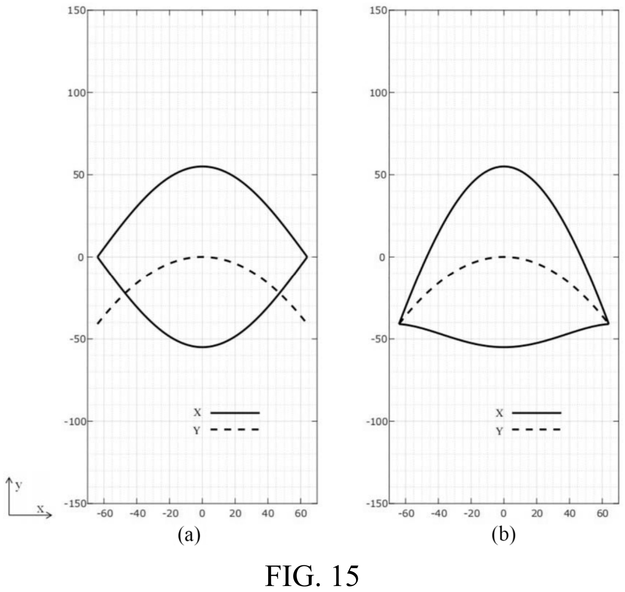

In part (a) of FIG. 15, the two X lines are curves respectively corresponding to harmonics filtering functions $A_1COS(\omega_0 x)$ and $-A_1COS(\omega_0 x)$; the Y line is a curve corresponding to the tilting function $-0.01x^2$. In this case, $A_1$=55, P=256, and $\omega_0 = 2\pi/P$. In part (b) of FIG. 15, the upper and the lower X lines are curves obtained by combining the tilting function $-0.01x^2$ with $A_1COS(\omega_0 x)$ and $-A_1COS(\omega_0 x)$, respectively. The Y line in part (b) of FIG. 15 is consistent with the Y line in part (a) of FIG. 15. It is a curve corresponding to the tilting function $-0.01x^2$, and it is actually the midline of the shape shown in part (b) of FIG. 15. The shape shown in part (b) of FIG. 15 does not have acute angles that are difficult to manufacture and is a usable shape. The preferred practice of including four photoelectric detection units in one period of the grating can also be achieved by placing the photoelectric detection units in double rows.

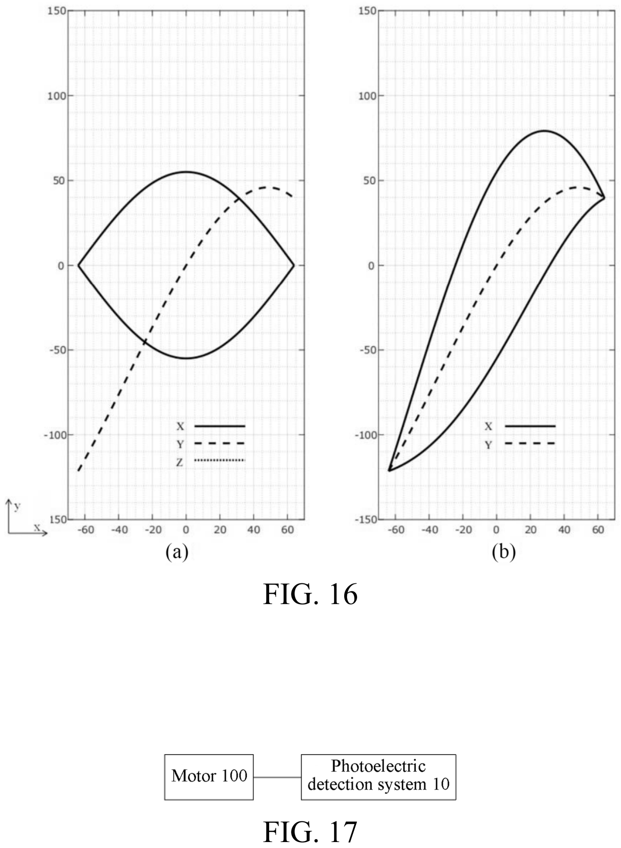

In part (a) of FIG. 16, the two X lines are curves respectively corresponding to harmonics filtering functions $A_1COS(\omega_0 x)$ and $-A_1COS(\omega_0 x)$; and the Y line is a curve corresponding to the tilting function $(5/3)x - 0.01x^2 - 0.0001x^3$. In this case, $A_1$=55, $A_2$=15, P=256, $\omega_0 = 2\pi/P$. In part (b) of FIG. 16, the upper and the lower X lines are curves obtained by combining the tilting function $(5/3)x - 0.01x^2 - 0.0001x^3$ with $A_1COS(\omega_0 x)$ and $-A_1COS(\omega_0 x)$, respectively. The Y line in part (b) of FIG. 16 is consistent with the Y line in part (a) of FIG. 16. It is a curve corresponding to the tilting function $(5/3)x - 0.01x^2 - 0.0001x^3$, and is actually the midline of the shape shown in part (b) of FIG. 16. The shape shown in part (b) of FIG. 16 has no acute angles that are difficult to manufacture, and at the two ends of the shape, i.e., the upper and the lower ends, one end is larger and the other one is smaller. The free area below the shape just accommodates the larger end of the mirror image of the shape by rotating it 180 degrees upside down. Repeatedly arranging such a pair of shapes laterally can improve the density of the arrangement, and in this way, the preferred practice of including four photoelectric detection units in one period of the grating can also be implemented.

With the advancement of technology, there might be in the field of photoelectric encoder other requirements for shapes and the postures of photoelectric detection units, which may be easily designed through the methods disclosed in embodiments of this application.

It should be understood that the values of P and each function parameter in the above embodiments are only exemplary. According to the principles disclosed in embodiments of this application, technicians is able to adjust the parameters used in the functions according to the period P of the grating, the required shape size, the arrangement manner, and the arrangement density in actual use.

In one embodiment, referring to FIG. 17, the present invention provides a motor 100 configured with a photoelectric detection system 10.

Specifically, referring to FIGs. 1, 3, and 13, the photoelectric detection system 10 includes: a scanning unit 11 with a light source 111 and a collimating lens 112, an output shaft 13, a grating disc 14 that has slits 141 and that rotates synchronously with the output shaft 13, a photoelectric detection device 15, and a signal processing circuit 16. The slits 141 are periodically arranged transparent stripes. More specifically, the periodically arranged stripes form periodically arranged transparent regions and opaque regions on the grating disc 14 (the "transparent regions" are the "slits" mentioned above). The grating disc 14 is able to rotate synchronously with the output shaft 13. In the scanning unit 11, the light emitted by the light source 111 passes through the collimating lens 112 to form parallel light. During the rotation of the grating disc 14, the parallel light passes through the grating disc 14 and generates pulse signals on the photoelectric detection unit 15. By processing the pulse signals, the current information of the output shaft such as the rotation angle, the number of revolutions, and the rotation speed can be obtained.

The photoelectric detection system 10 may also be in other forms or include other components. For example, if being configured to detect a translational displacement and speed, the photoelectric detection system includes a light source, a linear grating, a photoelectric detection device, and other corresponding components. The embodiments of the present application are not limited to the specific form of the photoelectric detection system 10.

The photoelectric detection device 15 is configured to detect the scanning light characterizing the displacement of the grating disc 14 and convert the scanning light into electrical signals characterizing the displacement of the grating disc 14. In this case, the geometric shape of the photoelectric detection unit 151 includes the first edge L1 and the second edge L2. The first edge L1 is described by the first description function, and the second edge L2 is described by the second description function. The first description function and the second description function both include: a tilting function, a midline adjustment function, and a harmonics filtering function. The photoelectric detection unit uses the difference between the first description function and the second description function to eliminate the harmonic components, thereby suppressing the harmonic components.

What is disclosed above is only preferred embodiments of the present invention and cannot be used to limit the scope of claims of the present invention. Therefore, equivalent changes made according to the claimed patent scope of the present invention still fall within the scope of the present invention.

**Claims**

1. A photoelectric detection unit, wherein
the photoelectric detection unit is used to detect scanning light stripes representing a relative displacement of a grating and convert the scanning light stripes into an electrical signal representing the displacement of the grating, and a slit period of the grating is P, wherein:

    a geometric shape of the photoelectric detection unit comprises a first edge and a second edge, and two vertices of the first edge and two vertices of the second edge coincide with each other to form a closed shape;
    the geometric shape of the photoelectric detection unit is that: after the geometric shape of the photoelectric detection unit undergoes a fan-shape-to-rectangle transformation, the first edge is described by a first description function and the second edge is described by a second description function; alternatively, the geometric shape of the photoelectric detection unit is that: the first edge is described by the first description function and the second edge is described by the second description function; and
    the first description function comprises a first tilting function and a first harmonics filtering function, the second description function comprises a second tilting function and a second harmonics filtering function, and a difference between the first description function and the second description function is a function directly proportional to $\cos\omega_0 x$, wherein $\omega_0 = 2\pi/P$, and x is a coordinate value taken along a grating-period direction.

2. The photoelectric detection unit according to claim 1, wherein the first description function further comprises a first midline adjustment function, and the second description function further comprises a second midline adjustment function.

3. The photoelectric detection unit according to claim 1, wherein either of the first harmonics filtering function and the second harmonics filtering function is a function selected from a group consisting of a sin function and a cos function.

4. The photoelectric detection unit according to claim 3, wherein the first harmonics filtering function is $A_1\cos\omega_0 x$, the second harmonics filtering function is $-A_1\cos\omega_0 x$, and $A_1 \neq 0$.

5. The photoelectric detection unit according to claim 2, wherein either of the first midline adjustment function and the second midline adjustment function is a function selected from a group consisting of a sin function or a cos function.

6. The photoelectric detection unit according to claim 2, wherein the first midline adjustment function and the second midline adjustment function are both $A_2\sin2\omega_0 x$, and $A_2 \neq 0$.

7. The photoelectric detection unit according to claim 1, wherein the first tilting function and the second tilting function are both monotonically increasing functions within an x value range of the closed shape.

8. The photoelectric detection unit according to claim 7, wherein the x value range of the closed shape is symmetrical with respect to an origin of the x-axis, and the first tilting function and the second tilting function are both odd functions within the x value range of the closed shape.

9. The photoelectric detection unit according to claim 8, wherein the first tilting function and the second tilting function are both kx, and k ≠ 0.

10. The photoelectric detection unit according to claim 1, wherein the scanning light stripes enter the photoelectric detection unit from the first edge and comes out from the second edge, so as to suppress harmonic components carried by the scanning light stripes.

11. The photoelectric detection unit according to any one of claims 1 to 10, wherein the first description function is:

$$y_{arc1} = kx + A_1 COS(\omega_0 x) + A_2 SIN(2\omega_0 x) \quad (1);$$

the second description function is:

$$y_{arc2} = kx - A_1 COS(\omega_0 x) + A_2 SIN(2\omega_0 x) \quad (2)$$

wherein k ≠ 0, and $A_1$ ≠ 0.

12. A photoelectric detection system, comprising:

a light source;
a grating having a plurality of slits for measurement, wherein a slit period of the grating is P; and
a photoelectric detection device, wherein it is able to form a relative displacement between the photoelectric detection device and the grating, the light source casts on the photoelectric detection device scanning light stripes which represents the relative displacement, there are a plurality of photoelectric detection units formed on the photoelectric detection device, and the photoelectric detection units are configured to detect the scanning light stripes and convert the scanning light stripes into an electrical signal representing the relative displacement;
a processing circuit, configured to convert the electrical signal into the relative displacement;
wherein:

a geometric shape of the photoelectric detection units comprises a first edge and a second edge, and two vertices of the first edge and two vertices of the second edge coincide with each other to form a closed graph; the geometric shape of the photoelectric detection unit is that: after the geometric shape of the photoelectric detection unit undergoes a fan-shape-to-rectangle transformation, the first edge is described by a first description function and the second edge is described by a second description function; alternatively, the geometric shape of the photoelectric detection unit is that: the first edge is described by the first description function and the second edge is described by the second description function; and
the first description function comprises a first tilting function and a first harmonics filtering function, the second description function comprises a second tilting function and a second harmonics filtering function, and a difference between the first description function and the second description function is a function directly proportional to $\cos\omega_0 x$, wherein $\omega_0 = 2\pi/P$, and x is a coordinate value taken along a grating-period direction.

13. A motor, configured with the photoelectric detection system according to claim 12.

10

13

141

14

111

11

112

Photoelectric detection device 15

Signal processing circuit 16

FIG.1

14a

141a

FIG. 2

15    151    152    153    154

w    d

Y

X

V

S4
S3
S2
S1

FIG. 3

FIG. 4

FIG. 5

FIG. 6

FIG. 7

FIG. 8

FIG. 9

FIG. 10

FIG. 11

15

L1

L2

FIG. 12

FIG. 13

FIG. 14

FIG. 15

FIG. 16

FIG. 17

## INTERNATIONAL SEARCH REPORT

| International application No. |
| --- |
| **PCT/CN2024/131470** |

**A.    CLASSIFICATION OF SUBJECT MATTER**

G01D5/347(2006.01)i;  G01D5/38(2006.01)i

According to International Patent Classification (IPC) or to both national classification and IPC

**B.    FIELDS SEARCHED**

Minimum documentation searched (classification system followed by classification symbols)

IPC: G01D

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 超星, CHAOXING; VEN; USTXT; EPTXT; WOTXT; IEEE: 光电检测, 编码器, 光栅, 位移, 电信号, 光信号, 谐波, 函数, photoelectric detection, encoder, grating disc, electric signal, optical signal, function

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 117664195 A (QUANZHOU CONNTEK MICROELECTRONICS TECHNOLOGY CO., LTD.) 08 March 2024 (2024-03-08)<br>description, paragraphs [0006]-[0022] | 1-13 |
| A | CN 204575098 U (SAE MAGNETICS (H.K.) LTD.) 19 August 2015 (2015-08-19)<br>description, paragraphs [0008]-[0039], and figures 1-7 | 1-13 |
| A | US 2003047673 A1 (MICROE SYSTEMS) 13 March 2003 (2003-03-13)<br>entire document | 1-13 |
| A | CN 200944051 Y (CHANGCHUN INSTITUTE OF OPTICS, FINE MECHANICS AND PHYSICS, CHINESE ACADEMY OF SCIENCES) 05 September 2007 (2007-09-05)<br>entire document | 1-13 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **14 January 2025** | **21 January 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/131470**

| Patent document cited in search report | | | Publication date (day/month/year) | Patent family member(s) | Publication date (day/month/year) |
|---|---|---|---|---|---|
| CN | 117664195 | A | 08 March 2024 | None | |
| CN | 204575098 | U | 19 August 2015 | None | |
| US | 2003047673 | A1 | 13 March 2003 | None | |
| CN | 200944051 | Y | 05 September 2007 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7268883 B2